# DEMANDE DE BREVET EUROPEEN

(11) **EP 4 530 993 A1**
(43) Date de publication de la demande: **02.04.2025**
(21) Numéro de dépôt: 24190793.0
(22) Date de dépôt: 25.07.2024
(51) Int. Cl.: G06V 10/22, G06V 10/26, G06V 20/52

(54) **MÉTHODE DE DÉTECTION ET DE COMPTAGE D'INDIVIDUS D'UNE FOULE**

(30) Priorité: 29.09.2023 FR 2310410
(71) Demandeur: IDEMIA Public Security France, 92400 Courbevoie (FR)
(72) Inventeur: MHADHBI, Siwar, 92400 Courbevoie (FR); PERRAULT, Pierre, 92400 COURBEVOIE (FR)
(74) Mandataire: IPS

(57) **Abrégé**

Méthode (2000), mise en oeuvre par ordinateur, de localisation et de comptage d'individus dans une foule (1001), ladite méthode (2000) prend, en données d'entrée, une ou plusieurs images (1000) d'une foule (1001) d'individus, et fournit, en données de sortie, une ou plusieurs images binaires (5000) de composantes connexes (5001a-z) correspondants aux têtes des individus de la foule (1001), ladite méthode (2000) comprend les étapes suivantes :
(a) fournir (2001) un réseau de neurones convolutif (CNN) préalablement entrainé sur un ensemble d'entraînement (TDS) composé d'images (3000) de foules (3001) d'individus dont les têtes (3001a-z) sont annotées, les annotations de chaque image dudit ensemble d'entraînement TDS ayant préalablement été modifiées à l'aide d'un traitement de pavage en cellules adjacentes (3002a-z);
(b) générer (2002), pour chaque image (1000) d'une foule fournie en données d'entrée, une carte de prédiction (PM) traitant ladite image (1000) par le réseau de neurones convolutif (CNN) fourni à l'étape (a) ;
(c) binariser (2003) chaque carte de prédiction (PM) générée à l'étape (b) à l'aide d'un module de binarisation (BM) configuré pour générer une valeur de seuil (T) ou une carte (TM) de valeurs de seuils propre à ladite carte de prédiction PM, chaque carte de prédiction binarisée (BPM) étant une image binaire (5000) de composantes connexes (5001a-z) correspondants aux têtes des individus.

## Description

### Domaine technique

La présente invention concerne une méthode et un système de détection et de comptage d'individus formant une foule.

### Arrière-plan technique

La détection et le comptage des individus formant une foule dans les espaces communs accueillant du public tels que les rues, les gares, les aéroports, les places, les forums, les lieux de pèlerinage, les lieux d'exposition, les salles de concerts et autres évènements, font aujourd'hui parties des actions à la base de la gestion dite raisonnée des foules. Cette gestion raisonnée recouvre la mise en oeuvre d'un certain nombre de moyens de renseignement, d'organisation, d'équipement et de logistique. Ces moyens s'étendent, par exemple, du simple reportage journalistique pour une mesure d'audience jusqu'aux mesures administratives ou policières de sécurité et sureté publiques en passant par la régulation de la fréquentation des sites ou encore l'évacuation des personnes en cas d'incidents. Des études statistiques fondées sur ces actions peuvent également fournir des enseignements essentiels pour établir et/ou optimiser des plans d'évacuation en cas d'incendie, concevoir des aménagements adaptés des espaces ou encore organiser des circuits de circulation pour fluidifier les mouvements de foule. Elles forment aussi un cadre d'étude, de modélisation et d'anticipation des comportements collectifs lors des mouvements de foule.

Les foules présentent des densités et des répartitions spatiales très diverses, et ne sont généralement pas homogènes. Elles peuvent notamment s'étaler autour d'éléments mobiliers, d'éléments de bâtiment, d'éléments de paysage tels que les arbres et arbustes, ou d'autres d'objets, tels que des véhicules stationnés ou en mouvement. A titre d'exemples, une foule peut simplement être constituée d'un groupe de piétons éparses circulant dans une rue, d'un groupe dense de coureurs ou de marcheurs lors d'un marathon ou d'une manifestation, ou encore d'un groupe d'individus sensiblement statiques lors d'un concert ou un festival.

Diverses méthodes de détection et de comptage des foules sont actuellement développées. Certaines d'entre elles se fondent sur les outils de vision artificielle, (« computer vision »), notamment sur l'analyse d'images ou de séquences vidéo acquises par des dispositifs d'acquisition préalablement disposés dans les espaces communs. D'autres exploitent les signaux des divers appareils électroniques mobiles de télécommunication dont les personnes sont aujourd'hui équipées, ou les variations des signaux de télécommunication provoquées par la variation du nombre d'individus ou leur mouvement. D'autres encore combinent l'analyse de plusieurs sources d'information depuis les images ou séquences vidéo jusqu'aux signaux de télécommunication en passant par des cartographies thermiques.

CN 102750539 A, SHENZHEN HIETECH ENERGY TECHNOLOGIES CO LTD, 24.10.2012 décrit une méthode de comptage d'individus fondée sur l'analyse d'images vidéo et d'images infrarouges.

WO 2016 155769 A1, TELECOM ITALIA SPA [IT], 06.10.2016 décrit une méthode de comptage d'individus dans une zone géographique pendant une période donnée à partir des signaux des appareils mobiles de télécommunication dont les individus sont équipés.

CN 107657226 A, UNIV ELECTRONIC SCI & TECH CHINA, 02.02.2018 décrit une méthode de comptage d'individus dans une foule fondée sur un réseau de neurones convolutif entrainé sur l'ensembles de données d'entrainement annotées Shanghai Tech.

CN 116012335 A, SHANDONG UNIVERSITY OF SCIENCE & TECHNOLOGY, 25.04.2023 décrit une méthode de comptage d'individus d'une foule fondée sur l'analyse combinée d'images de la foule et des informations d'état des canaux du signal Wi-Fi déployé dans la pièce dans laquelle se trouve la foule.

Le principal inconvénient des méthodes fondées sur l'exploitation exclusive ou partielle des signaux de télécommunication est qu'elles reposent sur des bases de données tierces dont l'accès n'est pas toujours aisé auprès des opérateurs de télécommunication. En outre, afin de préserver la confidentialité et l'intimité des personnes, ces données requièrent souvent un traitement préalable d'anonymisation pour lequel l'absence de fuite de données n'est cependant jamais complètement garantie. Pour ces raisons, ces méthodes, aussi performantes puissent-elles être, sont rarement utilisées, et celles fondées sur l'analyse d'images ou de séquences vidéo sont privilégiées.

Parmi les méthodes impliquant des outils de vision artificielle, les algorithmes heuristiques configurés pour localiser les têtes des individus dans une carte de densité ou une carte de prédiction fournissent des résultats très prometteurs notamment depuis que de larges ensembles de données d'entrainement annotées tels que Shanghai Tech, UCF-QNRF ou NWPU-Crowd sont disponibles.

A ce titre, Gao et al., Learning Indépendant Instance Maps for Crowd Localization, arXiv preprint arXiv:2012.04164 (2020), décrit une méthode de localisation et de comptage d'individus dans une foule dans laquelle une approche heuristique est combinée à une segmentation sémantique binaire en composantes connexes entourant ou englobant les têtes des individus. Cette méthode met en oeuvre un réseau du type HRNet (« High-Resolution Network ») ou du type VGG (« Visual Geometry Group ») combiné à un FPN (« Feature Pyramid Network ») préalablement entraîné sur un ensemble d'images de foules dont les têtes des individus sont annotées à l'aide de boîtes qui, lorsqu'elles se superposent, sont redimensionnées de sorte que la distance les séparant est supérieure au quart de leur largeur ou de leur hauteur. Avant l'apprentissage, pour chaque image, les annotations correspondantes sont utilisées pour créer une image binaire, appelée « Indépendant Instance Maps » (IIM) : la valeur des pixels des régions des images correspondant aux boîtes sont fixées à 1, celle des pixels correspondant à leur arrière-plan est fixée à 0. Ces images binaires IIM sont utilisées pour superviser l'entraînement d'une tâche de segmentation sémantique, par l'intermédiaire d'une fonction de perte de type MSE.

Le réseau de neurones produit des cartes de prédiction, aussi appelées cartes de confiance, dont les valeurs des pixels sont des probabilités d'appartenance ou de non-appartenance à une région des têtes des individus. La méthode comprend en outre un module de binarisation configuré pour réaliser un seuillage des cartes de prédiction à l'aide d'une carte de seuillage prédite à la volée par un encodeur adapté. A l'issu de ce traitement, les composantes connexes sont détectées sur les cartes binaires produites et sont modélisés sous la forme de boîtes englobantes.

### Résumé de l'invention

### Problème technique

La méthode décrite par Gao et al., Learning Indépendant Instance Maps for Crowd Localization, arXiv preprint arXiv:2012.04164 (2020) permet d'améliorer la détection et le comptage des individus dans des images de foules denses dont les tailles et les échelles varient fortement en raison d'effets de perspective.

Toutefois, cette méthode souffre de l'inconvénient majeur de sous-estimer le nombre d'individus notamment lorsque les foules présentent une très forte densité d'individus. Cet inconvénient a plusieurs origines. Il a été constaté que certaines des boîtes correspondant aux têtes des individus peuvent être considérées par l'algorithme comme « trop petites » et être indûment éliminées. Parfois, en particulier pour les foules particulièrement denses, la méthode ne parvient pas à séparer correctement les boîtes lorsqu'elles se superposent. Même quand elle y parvient, si les boîtes sont trop proches les unes des autres, elles finissent finalement par être fusionnées entre elles lors de l'inférence.

### Solution technique

Dans un premier aspect de l'invention, il est fourni une méthode mise en oeuvre par ordinateur, de localisation et de comptage d'individus dans une foule, ladite méthode prend, en données d'entrée, une ou plusieurs images d'une foule d'individus, et fournit, en données de sortie, une ou plusieurs images binaires de composantes connexes correspondants aux têtes des individus de la foule, ladite méthode comprend les étapes suivantes :
(a) fournir un réseau de neurones convolutif préalablement entrainé sur un ensemble d'entraînement composé d'images de foules d'individus dont les têtes sont annotées, les annotations de chaque image dudit ensemble d'entraînement ayant préalablement été modifiées à l'aide d'un traitement de pavage en cellules adjacentes ;
(b) générer, pour chaque image d'une foule fournie en données d'entrée, une carte de prédiction en traitant ladite image par le réseau de neurones convolutif fourni à l'étape (a) ;
(c) binariser chaque carte de prédiction générée à l'étape (b) à l'aide d'une valeur de seuil ou d'une carte de valeurs de seuils, chaque carte de prédiction binarisée étant une image binaire de composantes connexes correspondants aux têtes des individus .

D'autres modes avantageux de réalisation sont décrits ci-après.

Dans un deuxième aspect de l'invention, il est fourni un dispositif de traitement de données pour la mise en oeuvre d'une méthode selon le premier aspect de l'invention.

Dans un troisième aspect de l'invention, il est fourni un programme d'ordinateur comprenant des instructions qui, lorsque le programme est exécuté par un ordinateur, conduisent celui-ci à mettre en oeuvre une méthode selon le premier aspect de l'invention.

Dans un quatrième aspect de l'invention, il est fourni un support d'enregistrement lisible par un ordinateur comprenant des instructions qui, lorsqu'elles sont exécutées par un ordinateur, conduisent celui-ci à mettre en oeuvre une méthode selon le premier aspect de l'invention.

Dans un cinquième aspect de l'invention, il est fourni un système pour la mise en oeuvre d'une méthode selon le premier aspect de l'invention.

### Brève description des dessins

Fig. 1 est une image d'une foule d'individus.
Fig. 2 est un ordinogramme d'une méthode selon le premier aspect de l'invention.
Fig. 3 est une image d'une foule d'individus après un traitement de pavage en cellules adjacentes conformément au premier aspect de l'invention.
Fig. 4 est une représentation schématique d'un pavage en cellules adjacentes.
Fig. 5 est un exemple d'image binaire de composantes connexes correspondants aux têtes des individus obtenue à l'aide d'une méthode selon le premier aspect de l'invention appliquée à la Fig. 1.
Fig. 6 est une représentation schématique d'annotations de la tête d'un individu dans une image d'une foule.
Fig. 7 est une représentation schématique d'une réduction de taille de boîtes d'annotation en condition de superposition.
Fig. 8 est un exemple d'image binaire obtenue au terme d'un traitement de pavage appliquée sur la Fig. 3.
Fig. 9 est une représentation schématique d'un pavage en cellules adjacentes après réduction en sous-cellules.
Fig. 10 est une image d'une foule d'individus dont les têtes sont marquées à l'aide de points correspondant aux centres de gravité de boites rectangulaires englobant les têtes.
Fig. 11 est l'image d'une foule de la Fig. 10 après un traitement de pavage en cellules adjacentes.
Fig. 12 est l'image de la Fig. 11 après réduction des cellules adjacentes en sous-cellules.
Fig. 13 est l'image de la Fig. 12 dans laquelle les têtes des individus sont annotées à l'aide boites rectangulaires englobant les têtes.
Fig. 14 est une image binaire obtenue à partir de la Fig. 12 par l'intersection des sous-cellules avec les boîtes rectangulaires formant des annotations.
Fig. 15 est une représentation schématique d'un dispositif de traitement de données pour la mise en oeuvre d'une méthode selon le premier aspect de l'invention.

### Description détaillée des modes de réalisation

Au sens de la présente invention, il convient d'entendre par « image d'une foule d'individus » une image, telle qu'une photographie ou une extraction vidéo, sur laquelle est représentée une pluralité d'individus dont les têtes et éventuellement certains éléments du visage sont visibles ou discernables. La densité d'individus, c'est-à-dire le nombre d'individus par unité de surface dans l'image, est variable. Une foule est généralement dite peu dense lorsque le nombre d'individus dans l'image est compris entre 25 et 100, elle est dite moyennement dense lorsqu'il est compris entre 100 et 250, et elle est dite très dense lorsqu'il est supérieur à 250. De préférence, les images sont des images de foule en perspective dans lesquelles les individus sont à différentes profondeurs de champs.

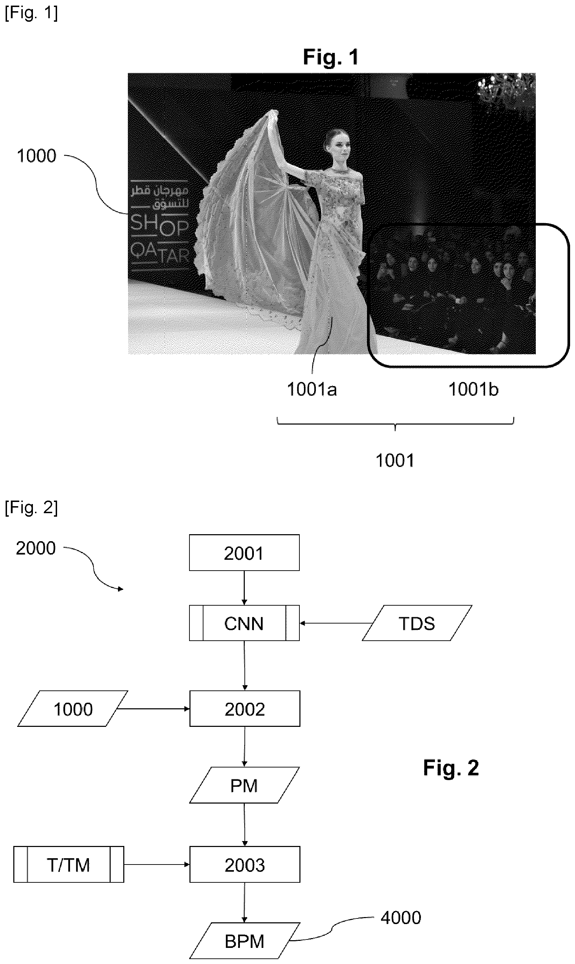

Un exemple d'image 1000 d'une foule 1001 en perspective est représenté sur la Fig. 1. Un premier individu 1001a apparaît en premier plan au milieu de l'image, et un groupe 1001b plus dense d'individus est visible à droite en arrière-plan. Leur tête et parfois certains éléments de leur visage sont discernables.

En référence aux Fig. 1 à 5, selon un premier aspect de l'invention, il est fourni une méthode 2000, mise en oeuvre par ordinateur, de localisation et de comptage d'individus dans une foule 1001, ladite méthode 2000 prend, en données d'entrée, une ou plusieurs images 1000 d'une foule 1001 d'individus, et fournit, en données de sortie, une ou plusieurs images binaires 5000 de composantes connexes 5001a-z correspondants aux têtes des individus de la foule 1001, ladite méthode 2000 comprend les étapes suivantes :
(a) fournir 2001 un réseau de neurones convolutif CNN préalablement entrainé sur un ensemble d'entraînement TDS composé d'images 3000 de foules 3001 d'individus dont les têtes 3001a-z sont annotées, les annotations de chaque image dudit ensemble d'entraînement TDS ayant préalablement été modifiées à l'aide d'un traitement de pavage en cellules adjacentes 3002a-z;
(b) générer 2002, pour chaque image 1000 d'une foule fournie en données d'entrée, une carte de prédiction PM en traitant ladite image 1000 par le réseau de neurones convolutif CNN fourni à l'étape (a) ;
(c) binariser 2003 chaque carte de prédiction PM générée à l'étape (b) à l'aide d'une valeur de seuil T ou d'une carte de valeurs de seuils TM propre à ladite carte de prédiction PM, chaque carte de prédiction binarisée BPM étant une image binaire 5000 de composantes connexes 5001a-z correspondants aux têtes des individus.

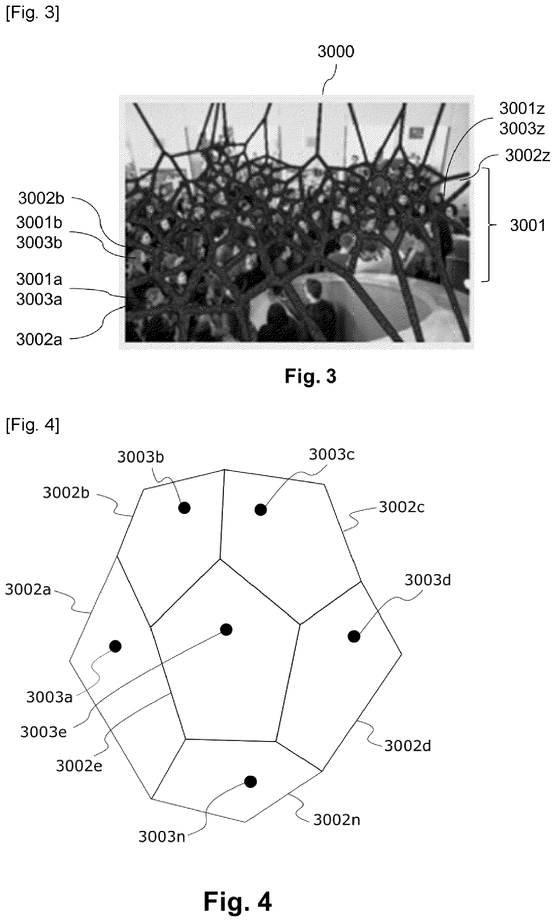

En référence à la Fig. 3, à l'étape (a), un réseau de neurone convolutif CNN est entrainé sur un ensemble de données d'entrainement TDS composé d'images 3000 de foules 3001 d'individus dont les têtes 3001a-z sont annotées. L'annotation des têtes est généralement réalisée manuellement ou automatiquement sous forme de signes distinctifs apposés sur l'image de manière à identifier et à localiser les têtes. Les annotations peuvent être incorporées directement dans l'image ou, de façon plus usuelle, être fournies sous la forme de masques, par exemple des masques binaires, qui, lorsqu'ils sont superposés sur les images, identifient et localisent les têtes. Les signes distinctifs formant les annotations peuvent présenter des formes différentes.

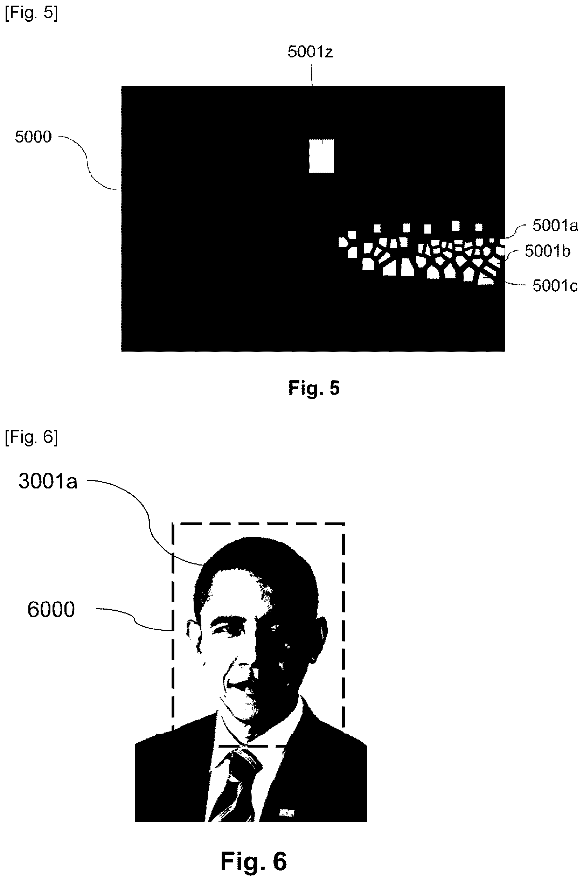

En référence à la Fig. 6, selon un mode de réalisation, à l'étape (a) les têtes 3001a des individus des images 3000 de l'ensemble d'entraînement TDS sont annotées à l'aide de boîtes 6000 englobant lesdites têtes 3001a-z. La Fig. 6 est volontairement simplifiée à des fins purement illustratives pour ne représenter qu'une seule tête entourée d'une boîte d'annotation. Pour une foule complète d'individus, une boîte entoure chacune des têtes. Un exemple d'ensemble d'entrainement comprenant des annotations sous la forme de boîte englobant les têtes est l'ensemble NWPU-Crowd, qui peut être avantageusement utilisé pour l'entraînement du réseau de neurones convolutif CNN de ladite l'étape (a).

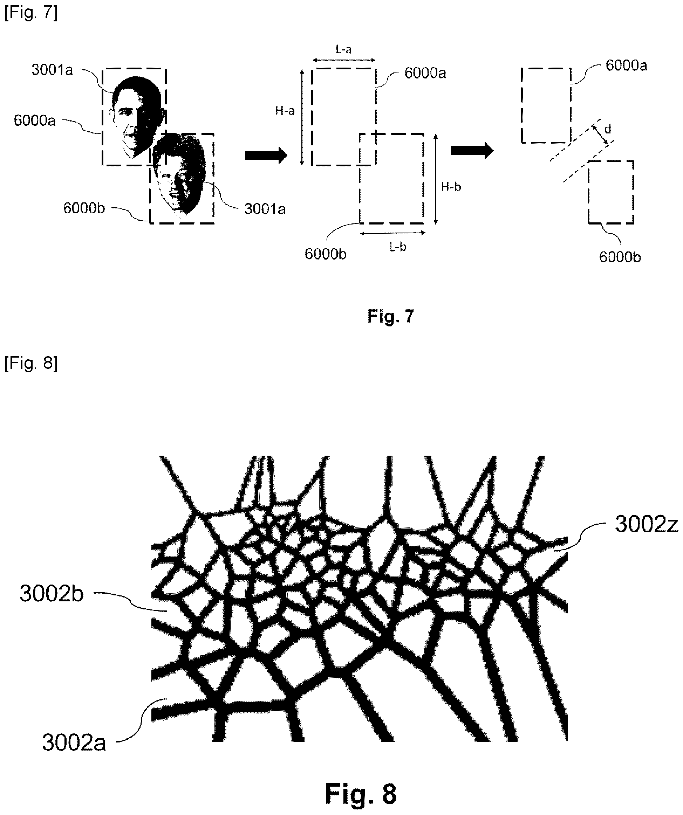

En référence à la Fig. 7, selon un autre mode de réalisation, à l'étape (a) les têtes 3001a-z des individus des images 3000 de l'ensemble d'entraînement TDS sont annotées à l'aide de boîtes 6000 centrées sur lesdites têtes 3001a-z, la taille des boîtes 6000a, 6000b en condition superposition sont réduites de sorte que la distance, d, les séparant est supérieure au quart de leur plus petite dimension, La, L-b, H-a, H-b. A titre d'exemple, pour des boîtes de forme rectangulaire, comme celles illustrées sur la Fig. 7, les boîtes 6000a, 6000b en condition superposition peuvent être réduites de sorte que la distance d les séparant est supérieure au quart de leur plus petite dimension parmi leur largeur L-a, L-b ou leur hauteur H-a, H-b. La Fig. 7 est volontairement simplifiée à des fins purement illustratives pour ne représenter que deux têtes, chacune entourée d'une boîte rectangulaire d'annotation.

L'opération de réduction de la taille des boîtes d'annotation peut être mise en oeuvre sur tout type d'ensemble d'entraînement adapté tel que, par exemple, les ensembles Shanghai Tech et UCF-QNRF. Il a été constaté que telle opération avant le traitement de pavage améliorait les performances de la méthode quant à la localisation et le comptage des têtes.

En référence à la Fig. 3, à l'étape (a) les annotations de chaque image dudit ensemble d'entraînement TDS ont préalablement subi un traitement de pavage en cellules adjacentes 3002a-z. Le traitement de pavage est de tout type adapté et permet une décomposition de l'espace des images en cellules adjacentes.

Selon un mode préféré de réalisation, à l'étape (a) le pavage est une décomposition de Voronoï, encore appelée tessellation de Dirichlet. Les cellules obtenues à l'aide d'une telle décomposition sont communément appelées polygones de Voronoï ou polygones de Thiessen. Dans ce type de pavage, chaque cellule adjacente 3002a-z a pour centroïde 3003a-z un unique point de l'image représentatif de la tête 3001a-z d'un individu et est formée des points de l'image 3000 adjacents les plus proches dudit centroïde 3003a-z. Il a été constaté qu'un traitement de pavage selon une décomposition de Voronoï fournissait des performances avantageuses.

A titre d'exemple, le traitement de pavage sur les annotations peut être mis en oeuvre de la manière suivante. Tout d'abord chaque image 3000 fait l'objet d'une décomposition en cellules adjacentes 3002a-z, chaque cellule adjacente 3002a-z ayant pour centroïde 3003a-z un unique point de l'image représentatif de la tête 3001a-z d'un individu et est formée des points de l'image 3000 adjacents les plus proches dudit centroïde 3003a-z. L'unique point représentatif de la tête 3001a-z d'un individu faisant office de centroïde 3003a-z peut être le centre d'une tête et être obtenu à partir des annotations de l'image 3000. Ensuite, il est procédé à une opération d'intersection entre chaque cellule de la décomposition en cellules adjacentes et les annotations telles que des boîtes englobantes. L'opération d'intersection a pour fonction de produire des annotations modifiées à partir desquelles une image binaire peut être dérivée, dans laquelle les pixels ont une valeur 1 (pixels blancs) si les pixels appartiennent aux annotations modifiées ou une valeur 0 (pixels noirs) si les pixels sont en-dehors desdites annotations.

Le réseau de neurones convolutif CNN entraîné à l'étape (a) est de tout type adapté. Selon un mode préféré de réalisation, le réseau de neurones convolutif CNN est un réseau de neurones convolutif HRNet. Un exemple de réseau de neurones convolutif de type HRNet est décrit dans Wang et al. "Deep high-resolution représentation learning for visual recognition." IEEE transactions on pattern analysis and machine intelligence 43.10 (2020): 3349-3364.

A l'étape (b), le réseau de neurones convolutif CNN est appliqué sur chaque image d'une foule 1000 fournie en données d'entrées de la méthode 2000. Il est généré pour chaque image 1000 une carte de prédiction PM, aussi appelée carte d'inférence qui se présente généralement sous la forme d'une image dont la valeur des pixels est une probabilité de présence d'une tête identifiée et localisée par le réseau de neurones convolutif CNN.

A l'étape (c), chaque carte de prédiction PM est binarisée à l'aide d'une valeur de seuil T ou d'une carte de valeurs de seuils TM propre à ladite carte de prédiction PM, chaque carte de prédiction binarisée BPM étant une image binaire 5000 de composantes connexes 5001a-z correspondants aux têtes des individus.

Typiquement, à titre d'exemple, la valeur de seuil T ou une carte de seuil TM peut être générée par un module de binarisation à partir d'une carte des caractéristiques (« features map ») extraite du réseau de neurones convolutif CNN utilisé pour générer la carte de prédiction PM depuis l'image 1000 fournie en entrée.

Dans un exemple de mode de réalisation, un module de binarisation BM peut comprendre
- un encodeur adaptatif sous la forme d'un réseau de neurones convolutif BM-CNN entrainé pour générer, pour chaque carte de prédiction PM, une valeur de seuil T ou une carte de seuil TM à partir d'une carte des caractéristiques fournie par le réseau de neurones convolutif CNN appliqué à l"étape (b) sur l'image 1000 pour générer ladite carte de prédiction PM, et
- une couche de binarisation sous la forme d'un réseau de neurones convolutif configuré pour générer une carte de prédiction binarisée BPM à partir de la carte de prédiction PM générée à l'étape (b) et la valeur de seuil T ou la carte de seuil TM générée par l'encodeur adaptatif à partir de ladite carte de prédiction.

Sur la Fig. 5 est représenté un exemple d'image 5000 de composantes connexes 5001a-z obtenue à partir de l'image de la Fig. 1 sur laquelle la méthode selon le premier aspect de l'invention a été appliquée. Dans le cadre de la présente invention, par composantes connexes, il est entendu les composantes connexes telles que définies en topologie mathématique. Sur la Fig. 5 chaque composante connexe est formé de l'espace de l'image correspond à une tête individuelle telle qu'elle est localisée par la méthode selon le premier aspect de l'invention.

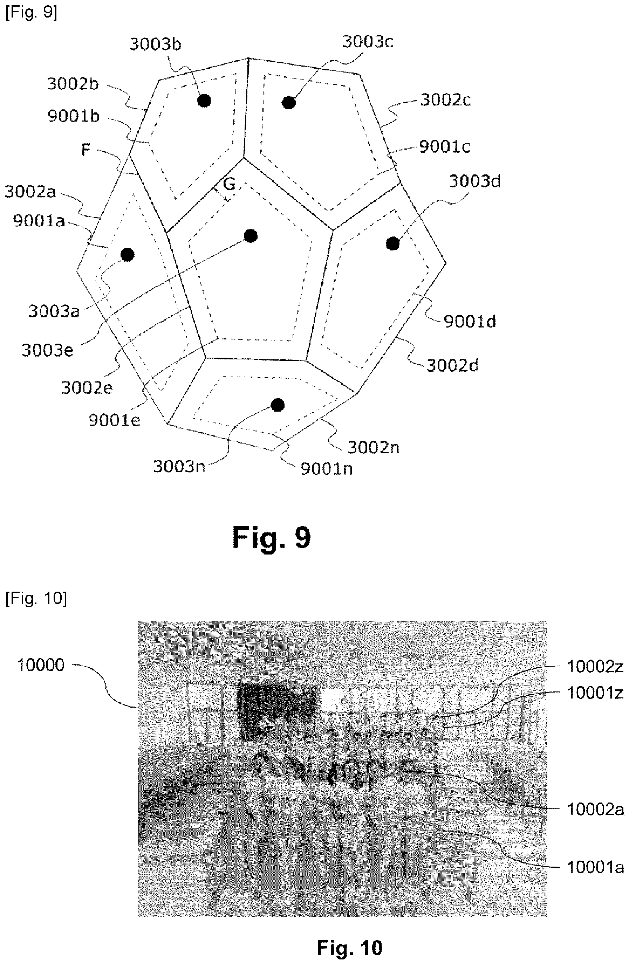

En référence à la Fig. 9, selon certains modes préférés de réalisation, à l'étape (a), le traitement de pavage comprend la réduction de chaque cellule adjacente 3002a-z en une sous-cellule 9001a-z, ladite sous-cellule 9001a-z est inscrite dans ladite cellule adjacente 3002a-z et est séparée des autres cellules adjacentes 3002a-z au niveau de la frontière F entre ladite cellule adjacente et les autres cellules adjacentes par une zone de séparation G d'une largeur donnée.

La réduction des cellules 3002a-z en sous-cellules 9001a-z permet de réduire la connexité des cellules par le remplacement du pavage en cellules adjacentes par un sous-pavage composé de sous-cellules séparées et distinctes ayant pour centroïde les mêmes uniques points de l'image représentatif de la tête d'un individu que celui des cellules adjacentes. Il a été constaté qu'un tel sous-pavage contribue à un apprentissage plus précis du réseau de neurones convolutif CNN dans l'identification et le comptage des têtes des individus dans une image d'une foule.

La largeur de la zone séparation G peut être fixe ou variable. Fixe, elle peut être définie par une valeur constante préalablement choisie et appliquée uniformément à toutes les sous-cellules. Variable, elle peut être adaptée pour chaque sous-cellule en fonction de certaines caractéristiques des cellules adjacentes premières voisines.

Comme illustré sur la Fig. 9, en prenant l'exemple de la sous-cellule 9001e, la largeur de la zone séparation G est la largeur entre les contours de ladite sous-cellule 9001e et ceux des cellules adjacentes 3002a, b, c, d, n à la cellule 3002e dans laquelle ladite sous-cellule 9001e est inscrite. La sous-cellule 9001e et la cellule 3001e dont elle est la réduction et dans laquelle elle est inscrite ont le même centroïde 3003e. La largeur totale de la zone de séparation entre deux sous-cellules adjacentes, par exemple entre les deux sous-cellules 9001e et 9001b, est donc égale à deux fois cette largeur lorsqu'elle est fixe pour toutes les sous-cellules ou à la somme des largeurs de séparation de part et d'autre de la frontière F des cellules adjacentes 3002b et 3002e lorsqu'elle est variable.

Selon un mode particulier de réalisation, la largeur de la zone de séparation G est fixe. Elle est d'au plus 5 pixels, de préférence d'au plus 2 pixels, voire d'au plus 1 pixel. Il a été constaté que ces valeurs permettent une séparation avantageuse des sous-cellules sans en réduire la taille de manière excessive. Lors de son entrainement sur l'ensemble d'entraînement, le réseau de neurones convolutif CNN bénéficie à la fois d'une quantité maximale d'information relative aux zones des images correspondant aux têtes des individus et d'une séparation adéquate pour améliorer son aptitude à discerner les têtes en condition d'éventuelle superposition.

Selon d'autres modes particuliers de réalisation, la largeur de la zone de séparation varie pour chaque sous-cellule 9001e en fonction soit de certaines caractéristiques des cellules adjacentes premières voisines 3002a, b, c, d, n, soit de certaines caractéristiques de la cellule adjacente 3001e dont elle est la réduction et dans laquelle elle est inscrite.

Selon un premier mode particulier de réalisation, pour chaque sous-cellule 9001a-z la largeur de la zone de séparation G est inférieure ou égale au huitième de la valeur minimale parmi les dimensions géométriques des annotations 6000 correspondant aux cellules adjacentes premières voisines de la cellule adjacente dans laquelle la sous-cellule est inscrite, le nombre de cellules première voisines étant d'au moins 3, de préférence d'au moins 5. La Fig. 8 fournit un exemple d'image binaire dans laquelle la largeur de la zone de séparation G entre les sous-cellules conformément à ce mode particulier de réalisation. Les variations de largeur sont illustrées par la variation de l'épaisseur des frontières entre les cellules 3002a-z.

Selon un deuxième mode particulier de réalisation, l'aire de l'intersection de chaque sous-cellule 9001a-z avec l'annotation 6000 associée à la cellule adjacente 3002a-z dans laquelle ladite sous-cellule 9001a-z est inscrite est supérieure ou égale à la moitié de l'aire de ladite annotation 6000.

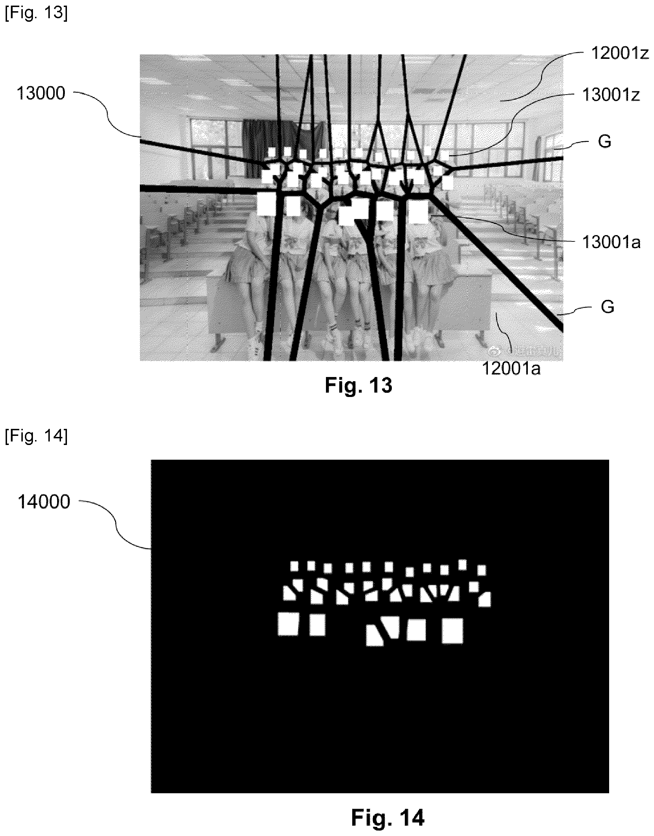

Un exemple détaillé du traitement de pavage conformément à certains modes de réalisation du premier aspect de l'invention est illustré sur les Fig. 10 à 14. En référence à la Fig. 10, une image 10000 d'une foule d'individus 10001a-z est fournie dans laquelle les têtes desdits individus 10001a-z sont marquées à l'aide de points 10002a-z. Ces points correspondent au centre de gravité d'annotations sous forme de boîtes rectangulaires englobant lesdites têtes. Ces boîtes rectangulaires 13001a-z sont illustrées sur la Fig. 13.

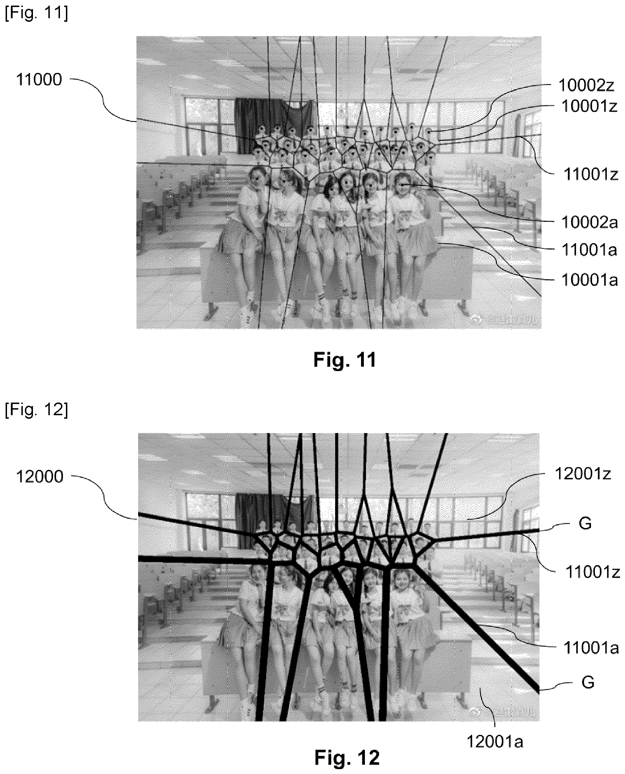

En référence à la Fig. 11, l'image 10000 de la Fig. 10 est soumise à un traitement de pavage pour former une deuxième image 11000 décomposée en cellules adjacentes 11001a-z, chaque cellule adjacente 11001a-z ayant pour centroïde un unique point 10002a-z de l'image représentatif de la tête d'un individu 10001a-z et est formée des points de l'image 11000 adjacents les plus proches dudit centroïde. En l'espèce, l'unique point représentatif de la tête d'un individu 10001a-z faisant office de centroïde est constitué par le point 10002a-z marquant la tête de l'individu 100001a-z.

En référence à la Fig. 12, les cellules adjacentes 11001a-z de l'image 11000 sont ensuite réduites en sous-cellules 12001a-z. Chaque sous-cellule 12001a-z est inscrite dans la cellule adjacente 11001a-z dont elle est la réduction. Elle est également séparée des autres cellules adjacentes 11001a-z par une zone de séparation G d'une largeur donnée. Dans le présent exemple, la largeur de la zone de séparation G est égale au huitième de la valeur minimale parmi les dimensions géométriques des annotations 13001a-z correspondant aux cellules adjacentes premières voisines de la cellule adjacente dans laquelle la sous-cellule est inscrite. Le nombre de cellules première voisines est égal à 5. Comme indiqué précédemment, en référence à la Fig. 13, les annotations sont des boîtes 130001a-z rectangulaires englobant les têtes des individus. Sur la Fig. 13 sont également représentées, à des fins d'illustration, les sous-cellules 12001a-z.

Il est ensuite procédé à l'intersection des sous-cellules 12001a-z avec les boîtes 13001a-z rectangulaires formant les annotations. Comme expliqué précédemment, L'opération d'intersection a pour fonction de produire des annotations modifiées à partir desquelles une image binaire peut être dérivée, dans laquelle les pixels ont une valeur 1 (pixels blancs) si les pixels appartiennent aux annotations modifiées ou une valeur 0 (pixels noirs) si les pixels sont en-dehors desdites annotations. L'image binaire 14000 dérivée de l'intersection des sous-cellules 12001a-z avec les boîtes 13001a-z d'annotations est représentée sur la Fig. 14. Sur cette figure, les boites 13001a-z d'annotations apparaissent tronquées. Les parties tronquées des boîtes 13001a-z correspondent aux parties desdites boîtes en condition de superposition avec les zones de séparation G entre les sous-cellules 120001a-z.

Lors de l'entraînement d'un réseau de neurones convolutif, il est de pratique courant de recourir à une fonction objective, aussi appelée « loss function » ou « cost function », pour quantifier l'écart à la solution optimale. Cette fonction peut comprendre plusieurs termes dont au moins un terme permettant de caractériser l'écart entre une image annotée et une carte de prédiction générée par le réseau de neurones convolutif à partir de la même image non annotée lors de son entraînement. Un exemple de fonction objective peut être une fonction de type L2 au pixel près (« pixel-wise »), également appelée erreur quadratique moyenne au pixel près, ou de type entropie croisée (« cross-entropy ») au pixel près (« pixel-wise ») entre l'image annotée et la carte de prédiction.

Selon certains modes de réalisation, à l'étape (a) l'entraînement du réseau de neurones convolutif CNN comprend l'utilisation d'une fonction objective, ladite fonction objective comprend un paramètre de pénalité associé aux pixels de l'image situés sur les frontières F communes des cellules adjacentes 3001a-z et/ou dans les zones de séparation G entre sous-cellules 9001a-z.

Selon un exemple de réalisation, la fonction objective peut comprendre plusieurs termes, tels que des différences quadratiques, associées à chaque pixel de l'image, chacun des termes est affecté d'un paramètre de pénalité sous la forme d'un facteur de pondération dont la valeur est plus élevée lorsque les pixels de l'image annotée ayant subi un traitement de pavage et les pixels de la carte de prédiction obtenue à partir de ladite image sont situés sur les frontières communes des cellules adjacentes de ladite image et/ou dans les zones de séparation desdites cellules adjacentes. La valeur du facteur de pondération peut être fixée empiriquement ou par une méthode d'optimisation mathématique.

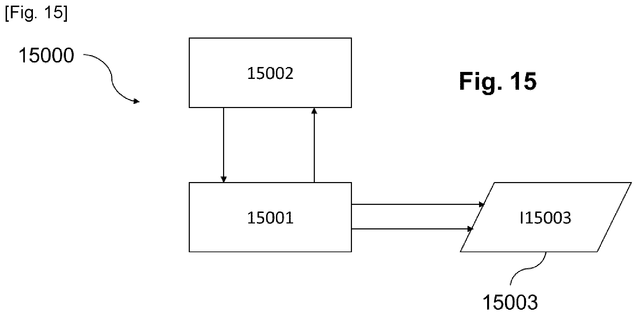

La méthode selon le premier aspect de l'invention est mise en oeuvre par ordinateur. En référence à la Fig. 15, selon un deuxième aspect de l'invention, il est fourni un dispositif 15000 de traitement de données comprenant des moyens pour la mise en oeuvre d'une méthode selon l'un des quelconques modes de réalisation du premier aspect de l'invention.

Un exemple de moyen d'exécution de la méthode est un dispositif qui peut être chargé d'exécuter automatiquement des séquences d'opérations arithmétiques ou logiques pour réaliser des tâches ou des actions. Ce dispositif, également appelé ordinateur, peut comprendre une ou plusieurs unités centrales de traitement (CPU) et/ou un ou plusieurs processeurs graphiques (GPU) 15001 ainsi qu'au moins un dispositif de contrôle adapté à l'exécution de ces opérations. Il peut également comprendre d'autres composants électroniques tels que des interfaces d'entrée/sortie 15002, des dispositifs de stockage non volatils ou volatils 15003, et des bus de communication pour le transfert de données entre les composants internes du dispositif ou avec des composants externes. L'un des dispositifs d'entrée/sortie 15002 peut être une interface utilisateur pour l'interaction homme-machine, par exemple une interface utilisateur graphique pour afficher des informations compréhensibles par l'homme.

Selon un troisième aspect de l'invention, il est un programme d'ordinateur I15003 comprenant des instructions qui, lorsque le programme est exécuté par un ordinateur, conduisent celui-ci à mettre en oeuvre une méthode selon l'un des quelconques modes de réalisation du premier aspect de l'invention.

Tout type de langage de programmation, compilé ou interprété, peut être utilisé pour mettre en oeuvre les étapes de la méthode de l'invention. Le programme d'ordinateur peut faire partie d'une solution logicielle, c'est-à-dire d'une collection d'instructions exécutables, de codes, de scripts ou autres et/ou de bases de données.

Selon un quatrième aspect de l'invention, il est fourni un support d'enregistrement 15003 lisible par ordinateur comprenant des instructions qui, lorsqu'elles sont exécutées par un ordinateur, conduisent celui-ci à mettre en oeuvre une méthode selon l'un des quelconques modes de réalisation du premier aspect de l'invention.

Le support d'enregistrement 15003 lisible par ordinateur est de préférence une mémoire non volatile, par exemple un disque dur ou un lecteur à semiconducteurs. Il peut être un support de stockage amovible ou un support de stockage non amovible faisant partie d'un ordinateur.

Le support d'enregistrement 15003 lisible par ordinateur peut également être une mémoire volatile à l'intérieur d'un support amovible. Cela peut faciliter le déploiement de l'invention dans de nombreux sites de production.

Le support d'enregistrement 15003 lisible par ordinateur peut faire partie d'un ordinateur utilisé comme serveur à partir duquel des instructions exécutables peuvent être téléchargées et, lorsqu'elles sont exécutées par un ordinateur, faire en sorte que l'ordinateur exécute une méthode selon l'un des modes de réalisation décrits dans le présent document.

Le programme d'ordinateur I15003 et le support 15003 sur lequel il est enregistré peuvent être mis en oeuvre dans un environnement informatique distribué, par exemple l'informatique en nuage. Les instructions peuvent être exécutées sur un serveur auquel un ou plusieurs ordinateurs clients peuvent se connecter et fournir des données codées en tant que données d'entrée d'une méthode selon l'un quelconque des modes de réalisation du premier aspect de l'invention. Une fois les données traitées, le résultat peut être téléchargé et décodé sur l'ordinateur client ou être envoyé directement, par exemple, sous forme d'instructions.

Selon un cinquième aspect de l'invention, il est fourni un système de localisation et de comptage d'individus dans une foule. Le système comprend :
- un module d'acquisition d'une ou plusieurs images d'une foule d'individus ;
- un dispositif 15000 de traitement de données sur l'un des quelconques modes de réalisation du deuxième aspect de l'invention et configuré pour recevoir et traite une ou plusieurs images acquises par le module d'acquisition.

Le module d'acquisition est de tout type adapté pour l'acquisition d'une ou plusieurs images d'une foule. Il peut être un appareil photographique numérique ou une caméra vidéo numérique muni d'un capteur numérique de type CCD ou CMOS.

Selon un mode préféré de réalisation, e module d'acquisition est configuré pour l'acquisition d'images d'une image arienne en perspective d'une foule d'individus. A titre d'exemple, le module d'acquisition peut être une caméra fixée sur un mât à une hauteur comprise entre 1,5 et 5 mètres.

### Exemples

Selon un premier exemple de méthode conformément au premier aspect de l'invention, à l'étape (a), il est fourni un réseau de neurones convolutif CNN de type HRNet entrainé sur l'ensemble d'entraînement NWPU-Crowd pendant un peu plus d'environ 450 époques. Avant l'entraînement, les annotations des images de l'ensemble d'entraînement ont fait l'objet d'un traitement de pavage sous la forme d'une décomposition de Voronoï dans lequel chaque cellule a pour centroïde un unique point de l'image représentatif de la tête d'un individu. Chaque cellule a été ensuite réduite en une sous-cellule séparée des autres cellules adjacentes par une zone de séparation d'une largeur de 1 pixel. Les annotations ont été modifiées en réalisant une intersection entre lesdites annotations et les sous-cellules. Puis, des images binaires ont été créées à partir des annotations modifiées. Ces images binaires ont servi de données cibles pour l'entraînement du réseau de neurones convolutif.

La méthode selon ce premier exemple est appliquée sur les images de l'ensemble de validation correspondant à l'ensemble NWPU-Crowd. Pour chacune de ces images, une carte de prédiction est générée conformément à l'étape (b) de la méthode. Cette carte est ensuite binarisée conformément à l'étape (c) avec une valeur de seuil fixée à 0,5.

Dans un exemple comparatif, la méthode décrite dans Gao et al., "Learning Indépendant Instance Maps for Crowd Localization", arXiv preprint arXiv:2012.04164v3, 2022 est utilisée. Le réseau de neurone convolutif de type HRNT de cet exemple est entraîné sur les images du même ensemble d'entraînement NWPU-Crowd. Les images n'ont subi aucun traitement de pavage. La méthode de ce contre-exemple est ensuite appliquée sur les images de l'ensemble de validation correspondant à l'ensemble NWPU-Crowd.

Dans le tableau 1, sont reportées les valeurs de NAE, MAE et RMSE dans le comptage des têtes des individus telles qu'obtenues par le premier exemple E1 conforme à l'invention et le contre-exemple CE1 sur des images présentant des foules d'individus de différentes densités : 1 à 24 individus, 25 à 100 individus, 101 à 250 individus, 251 à 500 individus, et plus de 500 individus.

Le NAE, « normalized absolute error », est l'erreur absolue normalisée. Le MAE, « mean absolute error », est l'erreur absolue moyenne. Le RMSE, « root mean square error », est la racine de l'erreur quadratique moyenne.

| Tab. 1 | NAE | | | | | | MAE | RMSE |
|---|---|---|---|---|---|---|---|---|
| Densité | [1,24] | [25,100] | [101,250] | [251,500] | [501 ; inf[ | Total | | |
| CE1 | 0,643 | 0,071 | 0,135 | 0,192 | 0,249 | 0,183 | 66,7 | 249,2 |
| E1 | 0,672 | 0,067 | 0,111 | 0,157 | 0,195 | 0,161 | 54,1 | 206,4 |

Les résultats du Tab. 1 montrent que, par rapport à la méthode du contre-exemple, une méthode selon l'invention permet un gain moyen significatif de 2,2% sur l'erreur NAE dans le comptage des individus. Ce gain peut atteindre 3,5% pour les foules de forte densité. Le gain sur l'erreur RMSE atteint 42,8 points. En d'autres termes, une méthode selon le premier aspect de l'invention est capable de localiser et de compter des individus que la méthode selon le contre-exemple ne permet pas. Elle est donc plus fiable et plus précise dans le comptage d'individus dans une foule, en particulier une foule dense dont le nombre d'individus est supérieur à 25.

### Références

### Littérature brevet

CN 102750539 A, SHENZHEN HIETECH ENERGY TECHNOLOGIES CO LTD, 24.10.2012.
WO 2016 155769 A1, TELECOM ITALIA SPA [IT], 06.10.2016.
CN 107657226 A, UNIV ELECTRONIC SCI & TECH CHINA, 02.02.2018.
CN 116012335 A, SHANDONG UNIVERSITY OF SCIENCE & TECHNOLOGY, 25.04.2023.

### Littérature non-brevet

Gao et al., "Learning Indépendant Instance Maps for Crowd Localization", arXiv preprint arXiv:2012.04164v3, 2022.
Wang et al. "Deep high-resolution représentation learning for visual recognition." IEEE transactions on pattern analysis and machine intelligence 43.10 (2020): 3349-3364.

## Revendications

1. Méthode (2000), mise en oeuvre par ordinateur, de localisation et de comptage d'individus dans une foule (1001), ladite méthode (2000) prend, en données d'entrée, une ou plusieurs images (1000) d'une foule (1001) d'individus, et fournit, en données de sortie, une ou plusieurs images binaires (5000) de composantes connexes (5001a-z) correspondants aux têtes des individus de la foule (1001), ladite méthode (2000) comprend les étapes suivantes :
(a) fournir (2001) un réseau de neurones convolutif (CNN) préalablement entrainé sur un ensemble d'entraînement (TDS) composé d'images (3000) de foules (3001) d'individus dont les têtes (3001a-z) sont annotées, les annotations de chaque image dudit ensemble d'entraînement TDS ayant préalablement été modifiées à l'aide d'un traitement de pavage en cellules adjacentes (3002a-z) ;
(b) générer (2002), pour chaque image (1000) d'une foule fournie en données d'entrée, une carte de prédiction (PM) en traitant ladite image 1000 par le réseau de neurones convolutif (CNN) fourni à l'étape (a) ;
(c) binariser (2003) chaque carte de prédiction (PM) générée à l'étape (b) à l'aide d'une valeur de seuil (T) ou d'une carte de valeurs de seuils (TM), chaque carte de prédiction binarisée (BPM) étant une image binaire (5000) de composantes connexes (5001a-z) correspondants aux têtes des individus.

2. Méthode (2000) selon la revendication 1, telle qu'à l'étape (a) les têtes (3001a-z) des individus des images (3000) de l'ensemble d'entraînement (TDS) sont annotées à l'aide de boîtes (6000) englobant lesdites têtes (3001a-z).

3. Méthode (2000) selon la revendication 1, telle qu'à l'étape (a) les têtes (3001a-z) des individus des images (3000) de l'ensemble d'entraînement TDS sont annotées à l'aide de boîtes 6000 centrées sur lesdites têtes (3001a-z), la taille des boîtes (6000a, 6000b) en condition superposition sont réduites de sorte que la distance, d, les séparant est supérieure au quart de leur plus petite dimension, (L-a, L-b, H-a, H-b).

4. Méthode (2000) selon l'une quelconque des revendications 1 à 3, telle qu'à l'étape (a) le pavage est une décomposition de Voronoï.

5. Méthode (2000) selon l'une quelconque des revendications 1 à 4, telle qu'à l'étape (a), le traitement de pavage comprend la réduction de chaque cellule adjacente (3002a-z) en une sous-cellule (9001a-z), ladite sous-cellule (9001a-z) est inscrite dans ladite cellule adjacente (3002a-z) et est séparée des autres cellules adjacentes (3002a-z) au niveau de la frontière (F) entre ladite cellule adjacente et les autres cellules adjacentes par une zone de séparation (G) d'une largeur donnée.

6. Méthode (2000) selon la revendication 5, telle que la largeur de la zone de séparation est d'au plus 5 pixels, de préférence d'au plus 2 pixels, voire d'au plus 1 pixels.

7. Méthode (2000) selon la revendication 5, telle que pour chaque sous-cellule (9001a-z) la largeur de la zone de séparation (G) est inférieure ou égale au huitième de la valeur minimale parmi les dimensions géométriques des annotations (6000) correspondant aux cellules adjacentes premières voisines de la cellule adjacente dans laquelle la sous-cellule est inscrite, le nombre de cellules première voisines étant d'au moins 3, de préférence d'au moins 5.

8. Méthode (2000) selon la revendication 5, telle que l'aire de l'intersection de chaque sous-cellule (9001a-z) avec l'annotation (6000) associée à la cellule adjacente (3002a-z) dans laquelle ladite sous-cellule (9001a-z) est inscrite est supérieure ou égale à la moitié de l'aire de ladite annotation (6000).

9. Méthode (2000) selon l'une quelconque des revendications 1 à 8, telle qu'à l'étape (a) l'entraînement du réseau de neurones convolutif CNN comprend l'utilisation d'une fonction objective, ladite fonction objective comprend un paramètre de pénalité associé aux pixels de l'image situés sur les frontières (F) communes des cellules adjacentes (3001a-z) et/ou dans les zones de séparation (G) entre sous-cellules (9001a-z).

10. Méthode (2000) selon l'une quelconque des revendications 1 à 9, telle que le réseau de neurones convolutif (CNN) est un réseau de neurones convolutif HRNet.

11. Dispositif (15000) de traitement de données comprenant des moyens pour la mise en oeuvre d'une méthode (2000) selon l'une quelconque des revendication 1 à 10.

12. Programme d'ordinateur (115003) comprenant des instructions qui, lorsque le programme est exécuté par un ordinateur, conduisent celui-ci à mettre en oeuvre une méthode (2000) selon l'une quelconque des revendication 1 à 10.

13. Support d'enregistrement 10003 lisible par ordinateur comprenant des instructions qui, lorsqu'elles sont exécutées par un ordinateur, conduisent celui-ci à mettre en oeuvre une méthode (2000) selon l'une quelconque des revendications 1 à 10.

14. Système de localisation et de comptage d'individus dans une foule, ledit système comprend :
- un module d'acquisition d'une ou de plusieurs images d'une foule d'individus ;
- un dispositif (15000) de traitement de données selon la revendication 11 et configuré pour recevoir et traiter une ou plusieurs images acquises par le module d'acquisition.

15. Système selon la revendication 14, tel que le module d'acquisition est configuré pour l'acquisition d'images d'une image arienne en perspective d'une foule d'individus.
